Europäisches Patentamt

European Patent Office

Office européen des brevets

(11) Numéro de publication: **0 123 760**
A1

(12) **DEMANDE DE BREVET EUROPEEN**

(21) Numéro de dépôt: **83440048.3**

(51) Int. Cl.³: **B 23 B 31/04**

(22) Date de dépôt: **09.09.83**

(30) Priorité: **29.04.83 FR 8307293**

(43) Date de publication de la demande: **07.11.84**
**Bulletin 84/45**

(84) Etats contractants désignés: **AT BE CH DE GB IT LI LU NL SE**

(71) Demandeur: **EMILE PFALZGRAF "EPB", S.A., 7, rue de Neuwiller, F-67330 Bouxwiller (FR)**

(72) Inventeur: **Pfalzgraf, Emile, 7, rue de Neuwiller, F-67330 Bouxwiller (FR)**

(74) Mandataire: **Nuss, Pierre, 10, rue Jacques Kablé, F-67000 Strasbourg (FR)**

(54) **Mandrin à réglage axial.**

(57) Mandrin constitué par un corps principal (1) avec attachement, dans lequel coulisse une pièce mobile (2) étagée munie à son extrémité antérieure d'un cône (3) s'appuyant sur une partie cônique correspondante d'une butée à billes (4) d'un écrou (5) vissé sur l'extrémité libre du corps (1), par une clavette (6) d'entraînement de la pièce mobile (2), par des ressorts (7) logés dans le corps (1) et chargeant la pièce mobile (2) pour l'appliquer à pression contre la butée (4) de l'écrou (5), et par une butée mobile (8) s'appuyant sur la face arrière de la pièce mobile (2) et chargée par une vis (9).

0123760

- 1 -

EMILE PFALZGRAF "EPB", S.A.
7, rue de Neuwiller, 67330 BOUXWILLER (France)

Mandrin à réglage axial pour outils présentant
une queue de type quelconque

La présente invention concerne le domaine des accessoires de machines-outils, et a pour objet un mandrin à réglage axial pour outils présentant une queue de type quelconque.

Actuellement, le réglage des outils pose souvent un problème aux utilisateurs qui recherchent la possibilité d'un réglage des outils en dehors de la machine sur une longueur de 3 à 5 mm afin de pouvoir prérégler les outils avant de les introduire dans le magasin des machines ou dans la broche de la machine. Cette demande existe également pour les machines multibroches où les outils doivent être à la même longueur.

La présente invention a pour but de pallier cet inconvénient.

Elle a, en effet, pour objet un mandrin à réglage axial pour outils présentant une queue de type quelconque, caractérisé en ce qu'il est essentiellement constitué par un corps principal avec attachement, dans lequel coulisse une pièce mobile étagée munie à son extrémité antérieure d'un cône s'appuyant sur une partie cônique correspondante d'une butée à billes d'un écrou vissé sur l'extrémité libre du corps, par une clavette d'entraînement de la pièce mobile, par des ressorts logés dans le corps et chargeant la pièce mobile pour l'appliquer à pression contre la butée de l'écrou, et par une butée mobile s'appuyant sur la face arrière de la pièce mobile et chargée par une vis.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :

la figure 1 est une vue en élévation latérale et en coupe d'un mandrin conforme à l'invention adapté à la fixation d'outils à queue cylindrique ;

la figure 2 est une vue analogue à celle de la figure 1 d'une variante de réalisation de l'invention pour la fixation d'outils à cône morse, et

la figure 3 représente, dans une vue analogue à celle des figures 1 et 2, une autre variante de réalisation du mandrin adapté à la fixation d'outils à alésage lisse et entraînement par tenons ou clavette.

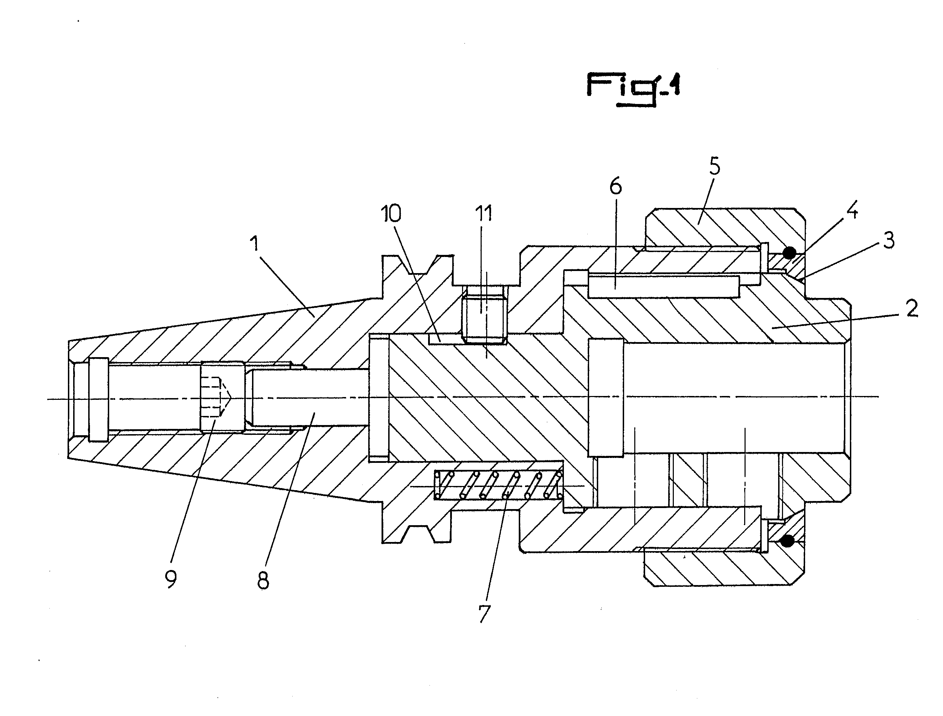

Conformément à l'invention, et comme le montre plus particulièrement, à titre d'exemple, la figure 1 des dessins annexés, le mandrin à règlage axial pour outils est essentiellement constitué par un corps principal 1 avec un attachement pour son montage sur une machine quelconque, par une pièce mobile étagée 2 coulissant dans le corps 1, et pourvue à son extrémité antérieure d'un cône 3, qui s'appuie sur une partie cônique correspondante d'une butée à billes 4 d'un écrou 5, qui est vissé sur l'extrémité libre du corps 1. L'entraînement de la pièce mobile 2 est réalisé au moyen d'une clavette 6, qui la guide simultanément en translation, et des ressorts 7, logés à intervalles réguliers dans le corps 1 chargent la pièce 2 pour l'appliquer contre la butée à billes 4 de l'écrou 5.

Ces ressorts 7, qui sont avantageusement au nombre de quatre, mais pourraient être d'un nombre inférieur ou supérieur, permettent de maintenir une application sous pression constante du cône 3 contre la butée 4 de l'écrou 5 lors du réglage.

A sa partie arrière de plus petit diamètre, la pièce mobile 2 est munie d'un plat 10, sur lequel s'appuie une vis 11 du corps 1, et qui sert à délimiter la zone de réglage, la vis 11 servant par ailleurs au serrage de la pièce 2 dans le corps 1.

Dans la partie arrière du corps 1 est montée à coulissement longitudinal une butée mobile 8, qui s'appuie sur la face arrière de la pièce 2, et dont le déplacement est réalisé sous l'action d'une vis 9, de sorte qu'un serrage plus puissant du cône 3 de la pièce 2 contre la butée à billes 4 de l'écrou 5 peut être obtenu. L'alésage de guidage de la butée 8 dans le corps 1 est avantageusement rectifié de sorte que la manoeuvre de la butée 8 est facilitée et que le réglage obtenu est extrêmement précis.

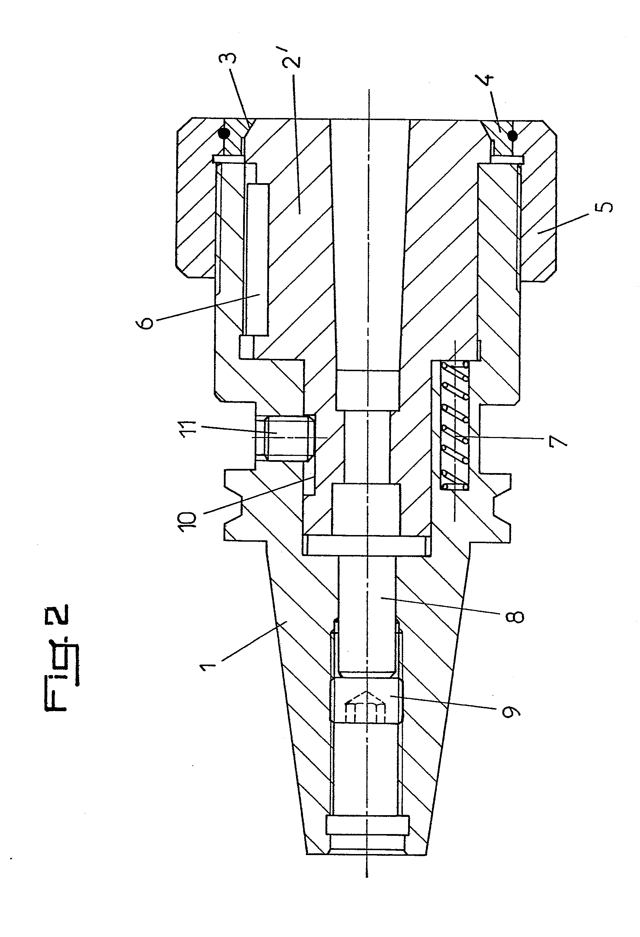

Le mandrin conforme à l'invention, représenté à la figure 1, est muni d'une pièce 2 de serrage d'un outil à queue cylindrique, cependant, ce mandrin est également utilisable pour le montage d'une pièce mobile 2' de serrage d'un outil à cône morse ou toute autre fixation, comme le montre la figure 2, les autres éléments restant identiques.

Le mandrin conforme aux figures 1 et 2 est mis en oeuvre de la manière suivante :

Après montage de l'attachement dans un banc de préréglage, l'outil est fixé dans la pièce mobile 2 au moyen de vis prévues ou fixées dans ladite pièce 2 ou par tout autre moyen. La vis 11 est alors desserrée et l'écrou 5 est manoeuvré en fonction du sens de réglage désiré. Un dévissage de l'écrou 5 occasionne une avance de la pièce 2 en direction de sortie du corps 1 sous l'action des ressorts 7, qui maintiennent le cône 3 de la pièce 2 en contact avec celui de la butée à billes 4 de l'écrou 5. Dans le cas d'une sortie trop importante de la pièce 2, l'écrou 5 est resserré.

Après atteinte du réglage recherché, la vis 11 est serrée afin de bloquer la pièce 2 en position, et une pression de réglage finale est appliquée sur la partie arrière de la pièce 2 au moyen de la vis 9 et de la butée mobile 8 pour exercer un effort plus important sur l'écrou 5 et réaliser un ensemble rigide.

Un serrage plus puissant de la pièce 2 peut être obtenu en desserrant préalablement la vis 11 et en serrant à fond la vis 9 pour appliquer à force le cône 3 de la pièce 2 contre la butée à billes 4 de l'écrou 5, puis en resserrant la vis 11.

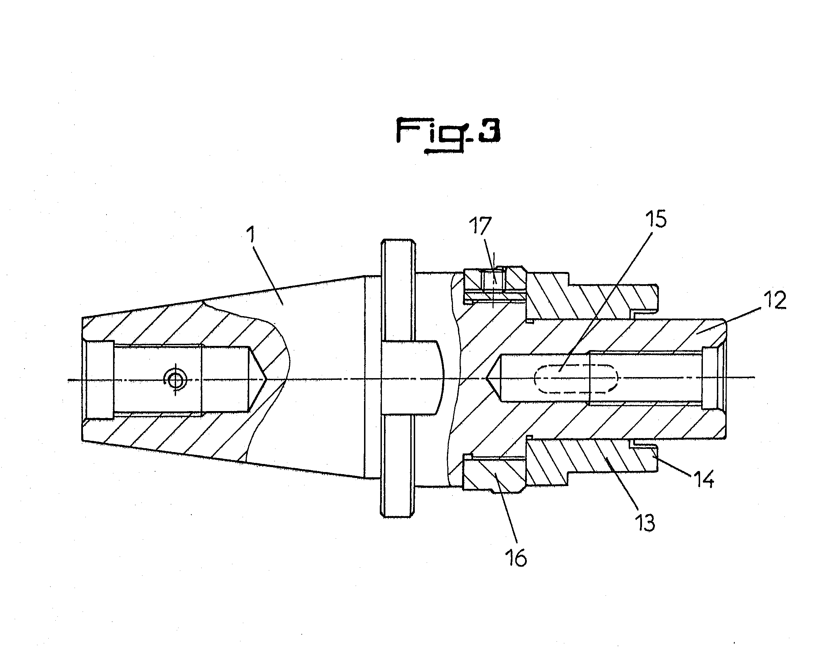

La figure 3 représente une variante de réalisation de l'invention, dans laquelle le corps principal 1 est pourvu à sa partie antérieure d'une section cylindrique de plus faible diamètre 12 formant un diamètre de centrage pour un outil à alésage lisse, et sur laquelle est montée à coulissement une pièce mobile 13 en forme de bague munie de deux tenons 14 d'entraînement de l'outil, une clavette 15 assurant l'entraînement en rotation de la pièce 13 par le corps 1, une bague filetée 16 montée sur le corps 1 derrière la pièce mobile 13 assurant le réglage de position de cette dernière, et pouvant être bloquée en position au moyen d'une vis 17.

Ainsi, suivant la rotation de la bague 16, il est possible de faire avancer ou reculer la pièce mobile 13 sur le corps 1, ensemble avec l'outil qu'elle entraîne, puis de bloquer l'écrou 16 en position au moyen de la vis 17, l'outil étant alors fixé sur l'avant du corps 1 et de la pièce mobile 13 au moyen d'une vis pénétrant à l'avant dudit corps 1.

L'entraînement des outils peut également être effectué uniquement au moyen de la clavette 15 d'entraînement de la pièce 13, cette clavette s'étendant alors jusqu'à proximité immédiate de la face avant du corps 1, et la pièce 13 se présentant sous forme d'une simple bague.

Grâce à l'invention, il est possible de réaliser des mandrins à réglage axial pour outils présentant une queue de type quelconque, dans lesquels il est possible de réaliser un réglage sur une longueur importante.

0123760

- 5 -

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention.

0123760

- 1 -

- R E V E N D I C A T I O N S -

1. Mandrin à réglage axial pour outils présentant une queue de type quelconque, caractérisé en ce qu'il est essentiellement constitué par un corps principal (1) avec attachement, dans lequel coulisse une pièce mobile (2) étagée munie à son extrémité antérieure d'un cône (3) s'appuyant sur une partie cônique correspondante d'une butée à billes (4) d'un écrou (5) vissé sur l'extrémité libre du corps (1), par une clavette (6) d'entraînement de la pièce mobile (2), par des ressorts (7) logés dans le corps (1) et chargeant la pièce mobile (2) pour l'appliquer à pression contre la butée (4) de l'écrou (5), et par une butée mobile (8) s'appuyant sur la face arrière de la pièce mobile (2) et chargée par une vis (9).

2. Mandrin, suivant la revendication 1, caractérisé en ce que, à sa partie arrière de plus petit diamètre, la pièce mobile (2) est munie d'un plat (10), sur lequel s'appuie une vis (11) du corps (1), et qui sert à délimiter la zone de réglage, la vis (11) servant par ailleurs au serrage de la pièce (2) dans le corps (1).

3. Mandrin, suivant la revendication 1, caractérisé en ce que le corps principal (1) est pourvu à sa partie antérieure d'une section cylindrique de plus faible diamètre (12) formant un diamètre de centrage pour un outil à alésage lisse, et sur laquelle est montée à coulissement une pièce mobile (13) en forme de bague munie de deux tenons (14) d'entraînement de l'outil, une clavette (15) assurant l'entraînement en rotation de la pièce (13) par le corps (1), une bague filetée (16) montée sur le corps (1) derrière la pièce mobile (13) assurant le réglage de

0123760

- 2 -

position de cette dernière, et pouvant être bloquée en position au moyen d'une vis (17).

4. Mandrin, suivant la revendication 3, caractérisé en ce que l'entraînement des outils est effectué uniquement au moyen de la clavette (15) d'entraînement de la pièce (13), cette clavette s'étendant alors jusqu'à proximité immédiate de la face avant du corps (1), et la pièce (13) se présentant sous forme d'une simple bague.

Fig.1

# Fig. 2

# Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | GB-A-1 419 686  (CLARKSON) <br> * Page  2, lignes 10-82; figures 1-3 * | 1,3,4 | B 23 B   31/04 |
| E | EP-A-0 079 700  (LORD) <br> * Figure  19;  page  15,  lignes 25-29; page 16, lignes 1-3 * | 1 | |
| A | FR-A-1 539 432  (VALERON) | | |
| A | US-A-3 347 115  (KOCH) | | |
| A | US-A-3 198 079  (WINNEN) | | DOMAINES TECHNIQUES RECHERCHES (Int. Cl. ³) |
| A | US-A-3 162 457  (IACCO) | | B 23 B   31/00 |

Le présent rapport de recherche a été établi pour toutes les revendications.

| Lieu de la recherche | Date d'achèvement de la recherche | Examinateur |
|---|---|---|
| LA HAYE | 06-07-1984 | BOGAERT F.L. |